(19) Europäisches Patentamt
European Patent Office
Office européen des brevets

(11) EP 0 893 593 A2

(12) **EUROPEAN PATENT APPLICATION**

(43) Date of publication:
**27.01.1999 Bulletin 1999/04**

(21) Application number: **98113800.1**

(22) Date of filing: **23.07.1998**

(51) Int. Cl.$^6$: **F02D 41/14**, F02D 21/08, F02M 25/08, F02D 37/02

(84) Designated Contracting States:
**AT BE CH CY DE DK ES FI FR GB GR IE IT LI LU MC NL PT SE**
Designated Extension States:
**AL LT LV MK RO SI**

(30) Priority: **25.07.1997 JP 199677/97**

(71) Applicant: **Hitachi, Ltd.**
**Chiyoda-ku, Tokyo 101-8010 (JP)**

(72) Inventors:
- **Atago, Takeshi**
**Hitachinaka-shi (JP)**
- **Hori, Toshio**
**Hitachinaka-shi (JP)**
- **Shimada, Kousaku**
**Hitachinaka-shi (JP)**

(74) Representative:
**Beetz & Partner**
**Patentanwälte**
**Steinsdorfstrasse 10**
**80538 München (DE)**

(54) **Control apparatus for use in internal combustion engine performing stratified charge combustion**

(57) In a control apparatus for use in an internal combustion engine (8) which has an exhaust gas sensor (20) adapted to detect exhaust gas components and provide an output signal conforming to an air-fuel ratio of mixture and which performs stratified charge combustion, signals (A/F, IGN) for controlling the air-fuel ratio of mixture and the fuel injection timing are generated on the basis of the output of the exhaust gas sensor (20). When an optimal air-fuel ratio responsible for combustion stability is changed as a result of execution of EGR and evaporative fuel purging, a change of the air-fuel ratio is determined by using the output of the exhaust gas sensor. When the influence of the EGR or the evaporative fuel purging upon the air-fuel ratio is great, the air-fuel ratio is corrected and the fuel injection timing or the ignition timing is corrected.

FIG. 1

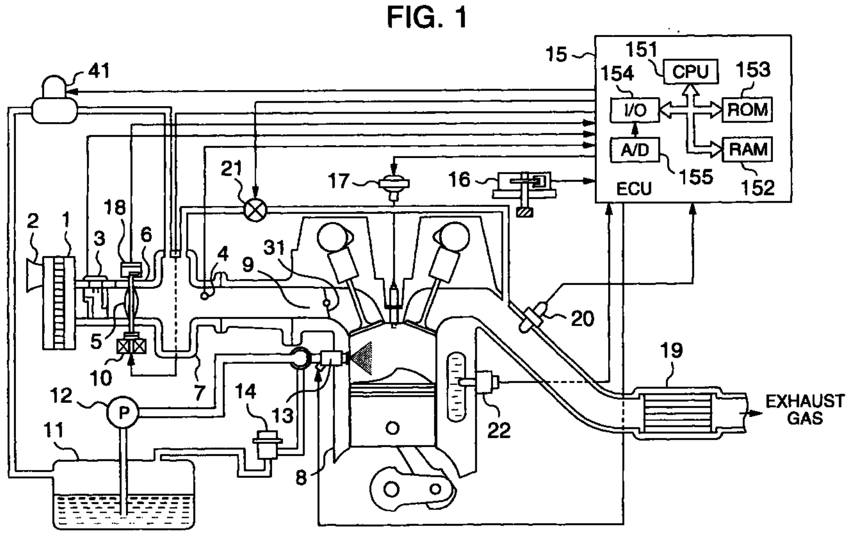


EP 0 893 593 A2

## Description

### BACKGROUND OF THE INVENTION

The present invention relates to a control apparatus for use in an internal combustion engine which performs stratified charge combustion and more particularly, to a technique of controlling the air-fuel ratio and the fuel injection timing such that the combustion stability can be maintained when evaporative fuel purging and exhaust gas recirculation (EGR) are carried out in a cylinder injection type internal combustion engine.

JP-A-4-194354 describes that evaporative fuel purging in the cylinder injection engine is carried out only when the engine load is larger than a preset value so that fuel vapor may be charged to an intake passage to effectively act on improvement in engine output.

JP-A-6-147022 describes that by recirculating exhaust gas at a high temperature to the combustion room of cylinder injection type internal combustion engine, EGR is carried out so as to reduce NOx emission during lean burn operation.

The above laid-open publications, however, do not take into account a degradation in combustion stability due to "evaporative fuel purging" and "EGR" which takes place when the engine is operated at a lean or very lean air-fuel ratio in the cylinder injection engine and expectantly, operation-ability may be degraded, vibration may be aggravated and quietness may be impaired.

### SUMMARY OF THE INVENTION

It is an object of the present invention to minimize the influence of main factors of external disturbance to the air-fuel ratio which are represented by "evaporative fuel purging" and "EGR" when the "evaporative fuel purging" and "EGR" are carried out, by controlling the air-fuel ratio and the injection timing through the use of a signal from an exhaust gas sensor in order that stability of combustion can be maintained over a wide range of operation condition inclusive of stratified charge combustion.

According to the present invention, in a control apparatus for use in an internal combustion engine which has an exhaust gas sensor adapted to detect exhaust gas components and deliver a signal conforming to an air-fuel ratio of mixture and which performs stratified charge combustion, signals for controlling the air-fuel ratio of mixture and the fuel injection timing are generated on the basis of an output of the exhaust gas sensor.

According to the control apparatus of the present invention, when an optimum air-fuel ratio responsible for combustion stability is changed as a result of the execution of EGR and evaporative fuel purging, the quantity of change of air-fuel ratio can be regulated by using the output of the exhaust gas sensor. When the influence of the EGR and/or fuel vapor purging upon the air-fuel ratio can not be disregarded, the air-fuel ratio and the fuel injection timing or the ignition timing are corrected to maintain the combustion stability.

### BRIEF DESCRIPTION OF THE DRAWINGS

Fig. 1 is a schematic diagram showing a cylinder injection engine in which a control apparatus of the present invention is used and a control system for the engine;

Fig. 2 is a map showing combustion stability curves for variables of ignition timing and fuel injection timing during lean burn operation;

Fig. 3 is a map showing smoke characteristics for variables of ignition timing and fuel injection timing during lean burn operation;

Fig. 4 illustrates how smoke and surge torque change as the air-fuel ratio changes on condition that the combustion stability and the smoke characteristic are optimal during lean burn operation;

Fig. 5 is an operation map showing a stratified charge combustion region, a homogeneous charge combustion region and an intermediate region therebetween in the cylinder injection engine for variables of engine speed and engine torque;

Fig. 6 is an operation map showing a stratified charge combustion region, a homogeneous charge combustion region and an intermediate region therebetween for variables of vehicle speed and air-fuel ratio;

Fig. 7 is an EGR control map showing EGR quantities under operation conditions indicated by engine torque and engine speed;

Fig. 8 is an EGR control map showing EGR quantities for variables of vehicle speed and load;

Fig. 9 is an evaporative emission control map showing a fuel vapor purging region under operation conditions indicated by engine torque and engine speed;

Fig. 10 is an evaporative emission control map showing fuel vapor quantities for variables of vehicle speed and load;

Fig. 11 is a map showing characteristics useful for explaining the influence of EGR upon the combustion stability during lean burn operation in the cylinder injection engine;

Fig. 12 is a map showing characteristics useful for explaining the influence of evaporative fuel purging upon the combustion stability during lean burn operation in the cylinder injection engine;

Fig. 13 is a diagram showing a characteristic useful for explaining the influence of EGR and evaporative fuel purging upon the combustion stability during an operation at a reference air-fuel ratio at which the combustion stability is optimal;

Fig. 14 is a graph showing characteristics indicative of changes in combustion stability indices with fluctuations in engine speed and combustion pressure;

Fig. 15 is a map showing characteristics useful for explaining the influence of EGR and evaporative fuel purging during stratified charge combustion operation in the cylinder injection engine;

Fig. 16 shows equations for determining a fuel vapor purging factor and an EGR factor which indicate degrees of influence of the evaporative fuel purging and the EGR, respectively, upon the combustion stability;

Fig. 17 a schematic diagram showing an EGR control system and an evaporative emission control system in the cylinder injection engine;

Fig. 18 is a graph for explaining a method of determining the air-fuel ratio of mixture in accordance with the output of the exhaust gas sensor in an embodiment of the control apparatus according to the present invention. Fig. 19 is a flow chart of air-fuel ratio control in the embodiment of the control apparatus according to the present invention.

Fig. 20 is a flow chart of air-fuel control, ignition timing control and fuel injection timing control in the embodiment of the control apparatus according to the present invention.

Fig. 21 is a flow chart of air-fuel ratio control and fuel vapor purging control in the embodiment of the control apparatus according to the present invention.

## DESCRIPTION OF THE PREFERRED EMBODIMENTS

The control apparatus of cylinder injection type internal combustion engine according to the present invention will now be described in greater detail by way of example with reference to the accompanying drawings.

Referring to Fig. 1 showing an example of an engine system to which the present invention is applied, air to be sucked into an engine is taken in through an inlet port 2 of an air cleaner 1. The air passes through a throttle body 6 provided with a throttle valve 5 for controlling the amount of intake air so as to enter a collector 7. The throttle valve 5 is connected to a motor 10 for driving it and the amount of intake air can be controlled by driving the motor 10 to manipulate the throttle valve 5. The intake air reaching the collector 7 is distributed to an intake manifold 9 connected to individual cylinders of the engine 8 and guided into the cylinders. In the intake manifold, a swirl control valve (SCV) 31 is provided in association with each cylinder and the intake air is applied with deflection force. The air applied with the deflection force is mixed with atomization of fuel in the cylinder of the engine as will be described later. Denoted by 4 is a pressure sensor for detection of vacuum pressure in the intake manifold. An output of the vacuum sensor 4 is applied to a control unit 15.

On the other hand, a fuel such as gasoline is sucked from a fuel tank 11 and pressurized by means of a fuel pump 12 and thereafter, charged or supplied to a fuel system in which a fuel injector 13 and a fuel pressure regulator 14 are arranged. Then, the pressure of the fuel is regulated to a predetermined value by means of the aforementioned fuel pressure regulator 14 and the fuel is injected into each cylinder of the engine 8 through the associated fuel injector 13 having its fuel injection nozzle opened to the associated cylinder. Also, a signal representative of an intake flow rate is delivered out of an air flow meter (sensor) 3 and applied to the electronic control unit 15.

Further, the throttle body 6 is mounted with a throttle sensor 18 for detection of an opening of the throttle valve 5 and an output of the throttle sensor 18 is also applied to the control unit 15.

A crank angle sensor 16 is driven for rotation by a cam shaft to deliver a signal representative of a rotational position of the crank shaft with an accuracy of about 2 to 4 degrees. This signal is also applied to the control unit 15. The fuel injection timing and the ignition timing are controlled on the basis of these signals.

An exhaust gas sensor 20 provided in the exhaust pipe detects an air-fuel ratio of mixture from exhaust gas components and delivers a signal indicative of the air-fuel ratio. Like the various sensor signals, the air-fuel ratio signal is also applied to the control unit 15. Denoted by 19 is a catalyst converter for reducing HC, CO and NOx in the exhaust gas.

An electrical control type EGR valve 21 is adapted to control the recirculation quantity of exhaust gas which is to be recirculated to the intake manifold. The EGR quantity is determined by electrically controlling the opening area of the EGR valve 21 on the basis of a pressure difference between pressures before and after the EGR valve 21 and the air-fuel ratio signal from the exhaust gas sensor 20. A temperature sensor 22 detects a temperature of engine coolant.

An electrical control type evaporative emission purging valve and canister 41 responds to an electrical signal to control the quantity of fuel vapor absorbed to the canister which is to be returned to the intake manifold of the engine in order to prevent fuel vapor from being discharged to the atmosphere from the fuel tank 11.

The electronic control unit (ECU) 15 is a digital computer in which a central processing unit 151, a random access memory (RAM) 152, a read-only memory (ROM) 153, an input/output unit (I/O) 154 and an analog-to-digital converter (A/D) 155 are interconnected to each other through signal paths as shown in Fig. 1. Analog signals from the various sensors are converted into digital signals by means of the A/D 155. The CPU 151 generates signals for controlling the engine by consulting a data table (data map), control initial values or constants stored in the ROM 153 in accordance with a control program also stored in the ROM 153. The I/O 154 controls input/output of an input/output signal to/from the ECU 15. The RAM 152 temporarily stores data necessary for the CPU 151 to carry out the signal processing.

The control unit 15 also fetches, as inputs, signals from the various sensors for detection of the operation state of the engine to execute predetermined operation processes and delivers results of the operation processes and calculated various control signals to the aforementioned fuel injector 13, ignition coil 17, throttle valve operating motor 10, electrical control EGR valve 21 and purge valve 41 so as to execute fuel supply control, ignition timing control and intake air quantity control and control operation conforming to exhaust emission regulations.

In the lean burn operation region of the cylinder injection engine, fuel is injected directly into the cylinder during compression stroke so that very rich mixture may concentrate near the ignition plug and the rich mixture is surrounded by air to set up a stratified charge state. Accordingly, combustion proceeds under a very lean state in which the overall air-fuel ratio of the mixture in the combustion chamber is about 40. On the other hand, under a high-load operation condition, fuel is injected into the cylinder during intake stroke, with the result that the injected fuel is mixed with the sucked air sufficiently homogeneously before a mixture is ignited.

Examples of combustion stability characteristics and smoke characteristics obtained under an operation condition that the air-fuel ratio of mixture is set to a value which is on the extreme lean side as viewed from the stoichiometric air-fuel ratio in the cylinder injection engine as above are depicted in Figs. 2 and 3. The experimental data is obtained when operation is performed with the torque and engine speed kept to be constant and the air-fuel ratio set to a lean state which is of 40. In Fig. 2, of contents of engine performance during stratified charge combustion, "engine stability" is illustrated to indicate that by changing the fuel injection timing and the ignition timing, an index "CPi" % (for example, engine vibration or combustion pressure fluctuation) representative of the combustion stability of the engine is changed. The smaller the numerical value of the index "CPi", the higher the combustion stability becomes. In Fig. 3, "smoke (soot)" data generated during combustion is illustrated. It will be seen from Figs. 2 and 3 that there exists an operation condition that "CPi" is compatible with "smoke" to optimize the combustion state (for example, at 50° (BTDC) fuel injection timing and 20°C (BTDC) ignition timing). It is to be noted that the engine is not operated in a region on the right side of dotted line in the graphs of Figs. 2 and 3.

Figs. 2 and 3 shows examples of the results obtained when the air-fuel ratio is set to 40. Fig. 4 shows data obtained when the air-fuel ratio is changed at the aforementioned optimal point for combustion stability and smoke. In the figure, blank circle indicates data obtained when fuel is injected during stratified charge combustion, that is, compression stroke and black dots indicate data obtained when fuel is injected during homogeneous charge combustion, that is, intake stroke. With respect to the boundary at an air-fuel ratio of 20, a stratified charge combustion region is established on the lean side and a homogeneous charge combustion region is established on the rich side. Accordingly, when a rich mixture flows into the cylinder by "evaporative fuel purging" during combustion under the stratified charge combustion condition to decrease the air-fuel ratio to a value which is smaller than a predetermined threshold value, stable combustion cannot be obtained unless the homogeneous charge combustion is recovered under a certain condition. On the other hand, when a large amount of combustion gas flows in by "EGR" during homogeneous charge combustion to cause the air-fuel ratio to exceed the predetermined threshold value, the combustion must conversely be brought into "stratified charge combustion".

In the present invention, by grasping "how many the air-fuel ratio is shifted by the evaporative fuel purging and EGR" while maintaining the stability in the aforementioned cylinder injection engine, the influence upon an actual air-fuel ratio is presumed. An embodiment of this type of control will be described hereunder. Fig. 5 shows a setting map 50 of air-fuel ratio in the engine, indicating that air-fuel ratios having mutually different values in relation to engine speed and torque are set in a "stratified charge combustion region", an "intermediate region" and a "homogeneous charge combustion region". This setting air-fuel ratio map is paired with a corresponding ignition timing setting map to provide data which in turn is stored in the ROM 153.

Fig. 6 shows an air-fuel ratio setting map 60 indicated for variables representative of the operation state of a vehicle carrying the cylinder injection engine. Stratified charge combustion is predominantly employed in a low-speed region but as the speed or load increases, homogeneous charge combustion proceeds to gain the engine output.

Figs. 7 and 8 show setting maps 70 and 80 of control characteristics for "EGR; exhaust gas recirculation". In the stratified charge combustion region shown in Fig. 5, the margin of EGR is large and therefore, a large amount of EGR gas is recirculated. The EGR quantity is effective to suppress "fuel consumption of engine" and "NOx emission" and must be determined to have a suitable value; but in the case of the stratified charge combustion in the cylinder injection engine, the EGR quantity is so set as to target "best fuel economy". Fig. 8 shows a map 80 of EGR quantity corresponding to the air-fuel ratio setting map of Fig. 6. As indicated in Fig. 8, the EGR quantity (not always percentage) increases toward a central portion where hatching is denser. While control of EGR in the conventional multipoint injection (MPI) engine and during homogeneous charge combustion is determined by "engine intake quantity" × "air-fuel ratio", it is necessary to take into account, in addition to the above, "CO concentration of EGR gas" × "air-fuel ratio near ignition plug" in the case of the stratified charge combustion in the cylinder injection system. This is because the air-fuel ratio near the ignition plug tends to become lean through the influence of the EGR gas.

Figs. 9 and 10 are maps 90 and 100 showing setting of evaporative fuel purging. When the evaporative fuel purging is carried out, the air-fuel ratio near the ignition plug tends to become rich in contrast to the case of EGR. A change of air-fuel ratio of mixture can be measured directly by means of the exhaust gas sensor 20 when the EGR is carried out but the concentration of gasoline vapor in the purging gas cannot be measured directly. Therefore, there needs a method of indirectly presuming a change of air-fuel ratio due to the evaporative fuel purging gas from, for example, exhaust gas component concentration. To this end, reference map setting is important. When the evaporative fuel purging is considered from the same standpoint as the EGR, it can be said that an idea for essential setting of the fuel vapor quantity in the cylinder injection system is the same as that in the conventional MPI system. However, since in the cylinder injection system the stratification is intensified extremely to permit combustion to proceed even at an average air-fuel ratio of 40 or more in the cylinder, combustion is affected very importantly by mixing of the evaporative fuel purging gasoline vapor with the controlled mixture.

Fig. 10 shows a control data map of fuel vapor quantity under an operation condition of vehicle speed and engine load. The purging duty indicates a duty ratio between on and off control operations for switching the purge valve 41. In a region where hatching is denser, the duty ratio has a larger value and accordingly, the fuel vapor quantity is larger. In a region where hatching is thinner, the duty ratio has a smaller value and the fuel vapor quantity is smaller. Since the air-fuel ratio is affected by the fuel vapor quantity to change the state of the engine, the fuel vapor quantity is required to be controlled suitably.

Referring now to Figs. 11 and 12, the influence of the EGR and evaporative fuel purging upon the combustion state during stratified charge combustion will be described. Firstly, the influence of the EGR upon the combustion stability is illustrated in Fig. 11. It is now assumed that the CPi value representative of the combustion stability of engine is practically allowable to have a value of 10% or less. Results of experiments conducted at an air-fuel ratio of 40 shows that in the case of small EGR (design setting value) represented by thin solid line, there exists a region for CPi < 10% which is wide in relation to the fuel injection timing and the ignition timing. As the EGR quantity increases as represented by thick solid line, the 10% region is gradually narrowed and at the same time, the injection timing at which combustion has been stable till then shifts to the retarding side with the ignition timing shifting to the advance side, thus indicating that the combustion is degraded. In the event that this phenomenon takes place, "fuel consumption" and "HC (hydrocarbon)" are greatly aggravated and hence, it is necessary that for example, the air-fuel ratio be shifted to the rich side or the condition for stratified charge combustion be changed.

On the other hand, the influence of fuel vapor gas upon the combustion stability is greatly affected by "the quantity of gasoline vapor contained in the purging gas". As shown in Fig. 12, during evaporative fuel purging, the optimal ignition timing and injection timing are shifted essentially reversely to the shifting in the case of EGR and the absolute value representative of stability is similarly degraded. Further, the combustion is degraded owing to the fact that the air-fuel ratio near the ignition plug becomes rich and therefore, degraded combustion is often generated abruptly, resulting in rich misfire. It is, therefore, very important to control the evaporative fuel purging.

Fig. 13 shows the influence of the EGR quantity and the fuel vapor quantity upon the combustion stability, indicating that when the air-fuel ratio changes from a reference air-fuel ratio at which the optimum combustion state is established as the "EGR quantity" or the "fuel vapor quantity" increases, the combustion stability is degraded.

Next, an example of the index representative of the stability of the engine will be described with reference to Fig. 14. It will be seen from Fig. 14 that the stability of the engine can be detected via a fluctuation of engine speed or more positively, by a fluctuation of combustion pressure. For example, in the EGR, a threshold value (stability allowable limit value) $S_{EGR}$ for target stability representing an allowable target value of stability exists and combustion is stabilized while aiming at the $S_{EGR}$. Also, in the evaporative fuel purging, a threshold value $S_{EVP}$ is set. The value of the $S_{EVP}$ is affected by the gasoline vapor quantity in the fuel tank 11 or canister 41 as described previously. But the gasoline vapor quantity, that is, the evaporative fuel purging quantity can be presumed by using the output of the exhaust gas sensor 20 provided in the exhaust pipe. A method for presumption will be detailed later with reference to Fig. 18.

Referring to Fig. 15, the method for suppression of combustion degradation as explained in connection with Fig. 13 will be described. In order to realize stable combustion during stratified charge combustion, both the evaporation purging factor and the EGR factor must be adjusted correlatively. When these factors are designated by EP and EG as shown in Fig. 16, each of the factors is affected by an integral value over unit time of a function. More particularly, the reference of each of the evaporative fuel purging and EGR is a function essentially of the intake air flow relative to engine speed N and fuel injection quantity To and target setting air-fuel ratio coefficient Te. In the case of the evaporative fuel purging, fuel vapor concentration density DNS preset in accordance with the operation state is additionally needed. When this function is realized in an actual vehicle system, a presumptive air-fuel ratio of fuel vapor is added as a correction value.

Fig. 17 is a schematic diagram showing a control part for evaporative fuel purging and EGR extracted from the cylinder injection engine control system.

The exhaust gas sensor 20 is a sensor which can measure the air-fuel ratio of mixture within a wide range of from a rich region to a very lean region for an air-fuel ratio of 40 or more. The catalyst converter 19 can reduce NOx emission even in the lean burn operation region. The air flow sensor 3 is a thermo-type air flow sensor.

A method of presuming the air-fuel ratio by using the exhaust gas sensor 20 is one of important points of the present invention and will be described hereunder with reference to Fig. 18.

Firstly, the air-fuel ratio is calculated by means of the ECU 15 in accordance with various conditions (combustion stability and exhaust gas control) of the engine to provide control air-fuel ratios on ordinate in Fig. 8. Abscissa represents actual air-fuel ratios which are obtained from the output of the exhaust gas air-fuel ratio sensor. Originally, the charge air-fuel ratio and the sensor output air-fuel ratio have the same value as shown at line A when neither the EGR nor the evaporative fuel purging is carried out (blow-by gas is neglected). With the EGR added, however, the line shifts toward the lean side. Since the percentage of EGR has a value calculated by the ECU 15, the relation taking the influence of the EGR into account can be drawn on a presumptive line which is line B. It is to be understood that the line B is differently affected by the EGR quantity and the EGR percentage but in Fig. 18, only one line is drawn for convenience of explanation of the case where a representative EGR quantity is used.

Next, an operation is considered in which evaporative fuel purging is carried out during EGR operation. On the assumption that how the EGR affects the output air-fuel ratio has already been known as described previously, the line B is corrected by an absolute value set by a reference air-fuel ratio of evaporative fuel purging to provide line B' on which the air-fuel ratio is to be detected. But on the assumption that measurement is actually carried out on line C, it will be appreciated that the air-fuel ratio on the initially presumed and set line B' can be corrected by a difference ΔA/F between air-fuel ratios detected on the lines C and B'. In other words, a change of air-fuel ratio due to the evaporative fuel purging can be presumed by the ΔA/F.

Embodiments of air-fuel ratio control method using the presumptive air-fuel ratio ΔA/F due to evaporative fuel purging detected in accordance with the principle shown in Fig. 18 will be described with reference to Figs. 19, 20 and 21. Fig. 19 is a flow chart of fundamental control according to an embodiment of the invention in which when the actual air-fuel ratio is lean in relation to the reference air-fuel ratio set in accordance with operation conditions of the engine, the EGR region is established to correct the air-fuel ratio to the rich side in order to improve the engine stability. Under the converse condition, the evaporative fuel purging region is established to correct the air-fuel ratio to the lean side. In the intermediate region, any of the above corrections is not executed.

In other words, the charge (input) air-fuel ratio A/FC is determined in accordance with various operation factors such as engine speed and intake air quantity (step 191). Further, the reference air-fuel ratio A/FMR is determined on the basis of the determined A/FC by consulting a data table corresponding to the line B' in Fig. 18.

The actual air-fuel ratio A/FMS is measured by means of the exhaust gas sensor 20 provided in the exhaust pipe and adapted to measure the combustion air-fuel ratio (step 192). Next, in step 193, the reference air-fuel ratio A/FMR, that is, an expectant predetermined reference value which should be an air-fuel ratio value obtained when the EGR quantity (percentage) and the evaporative fuel purging quantity (percentage) are taken into consideration is compared with the exhaust air-fuel ratio A/FMS which is an air-fuel ratio actually measured in the step 192. When the actual air-fuel ratio A/FMS is larger than the reference air-fuel ratio A/FMR, the air-fuel ratio is determined to be lean and it is decided that this lean condition is due to the EGR, causing the program to proceed to step 194. On the other hand, when the decision result in step 193 indicates that the actual air-fuel ratio A/FMS is smaller than the reference air-fuel ratio A/FMR, the air-fuel ratio is determined to be rich and it is decided that this rich condition is due to the evaporative fuel purging, causing the program to proceed to step 196.

When the decision result in step 193 indicates that the actual air-fuel ratio is in the range of the reference air-fuel ratio A/FMR, the intermediate region (step 195) prevails and corrections based on the EGR and evaporative fuel purging need not be executed. When the EGR region is determined in the previous step 194, it is decided in step 197 whether the actual air-fuel ratio A/FMS representing a measured value exceeds an execution limit allowable level A/FEG of the EGR correction. If the former exceeds the latter, a correction term for the influence of EGR, that is, A/F which is obtained by subtracting the difference ΔA/F EGR from the A/FMS in step 199 is set in step 201.

When the evaporative fuel purging region is determined in the previous step 196, it is decided in step 198 whether the exhaust air-fuel ratio A/FMS representing a measured value exceeds an execution limit allowable level A/FEV of the evaporative fuel purging correction. If the former exceeds the latter, an evaporative fuel purging correction term, that is, A/F which is obtained by adding the difference ΔA/F evaporative fuel purging to the A/FMS in step 200 is set in the step 201. The fuel injection amount is determined by the set A/F value.

Fig. 20 shows a control flow chart in which in addition to the correction of the air-fuel ratio, the ignition timing correction and the fuel injection timing correction are carried out. Used as correction values for the ignition timing and the injection timing are presumed EGR factor EG and evaporative fuel purging factor EP, respectively (see Fig. 16). Steps 191 to 198 are similar to those in Fig. 19 and will not be detailed.

When the region is determined to be one which requires EGR correction in steps 194 and 197, various corrections are carried out in step 202.

Firstly, when the influence of the EGR upon the A/F is indicated by fEGR pursuant to equation (1):

$$fEGR = f(N, To, Te) \cdot (1 - \Delta A/F) \quad \cdots (1),$$

the fEGR is expressed by a function of engine speed N, fuel injection time To and target setting air-fuel ratio coefficient Te.

The ΔA/F is indicated by a difference (A/FMS - A/FMR) between the actual air-fuel ratio measured by the exhaust gas sensor 20 and the reference air-fuel ratio.

The fEGR is integrated for all shift amounts of air-fuel ratio in relation to engine revolution and load pursuant to equation (2):

$$EG = \int\int fEGR(N) \cdot (1 - \Delta A/F)\, dN \cdot dTo \quad \cdots (2).$$

Injection timing IT corrected by an EGR factor (EGR correction term) determined pursuant to equation (2) is given by equation (3):

$$IT = IT \times EG \quad \cdots (3).$$

More specifically, an execution value of IT is determined pursuant to equation (4).

$$IT\ execution\ value = IT\ setting\ value + \Delta IT \times EG \quad \cdots (4)$$

where ΔIT is injection timing per 1 EG and is indicated by, for example, 5° crank angles/EG.

Similarly, the ignition timing corrected by the EGR correction term is determined by equation (5):

$$IGN = IGN \times EG \quad \cdots (5).$$

An A/F to be set is given by the following equation:

$$A/F = A/FMS + EG \times \Delta A/FEGR \quad \cdots (6)$$

where ΔA/FEGR is an A/F correction quantity per 1 EG and A/FMS is an exhaust air-fuel ratio (measured value) as indicated previously.

Next, when the region is determined to be one which requires evaporative fuel purging correction in steps 196 and 198, various corrections are made in step 203.

Given that the influence of fuel vapor purging upon the air-fuel ratio is fEVAP, the fEVAP is expressed by equation (7),

$$fEVAP = f(N, To, Te)(\Delta A/F) \quad \cdots (7),$$

where N is engine speed, To is fuel injection, Te is target setting air-fuel ratio coefficient and ΔA/F (= A/FMS - A/FMR) is the difference between the exhaust air-fuel ratio representing a measured value and the reference air-fuel ratio. By integrating the fEVAP in relation to rotation and load, an evaporative fuel purging factor EP indicative of a shift of air-fuel ratio due to the evaporative fuel purging can be determined pursuant to equation (8):

$$EP = \iint fEVAP(N)\, \Delta A/FdN \cdot dTo \quad \cdots (8).$$

Injection timing IT corrected by the evaporative fuel purging correction term given by equation (8) is determined by equation (9):

$$IT = IT \times EP \quad \cdots (9).$$

More specifically, an execution value of IT is given by equation (10):

$$\text{IT execution value} = \text{IT setting value} + \Delta IT \times EP \quad \cdots (10)$$

where ΔIT represents injection timing per 1 EP.

Similarly, ignition timing corrected by the evaporative fuel purging correction term is given by equation (11):

$$IGN = IGN \times EP \quad \cdots (11).$$

An A/F to be set is expressed by the following equation:

$$A/F = A/FMS - EP \times \Delta A/FEVAP$$

where ΔA/FEVAP is an A/F correction quantity per 1 EP and A/FMS is the actual air-fuel ratio (measured value) as described previously.

In equations (1) and (7) as above, "1 - ΔA/F" and "ΔA/F" indicate "shifts" from a value based on the target air-fuel ratio and control is carried out such that the sum of a shift during EGR and a shift during evaporative fuel purging corresponds to the target air-fuel ratio.

In Fig. 20, ΔA/F is indicated by A/FMS - A/FMR but by using A/FEG and A/FEV in place of the A/FMR to define "A/FMS - A/FEG" and "A/FMS -A/FEV", an error involved in the measuring system can be absorbed.

As shown in Fig. 21, when an air-fuel ratio which is expected to generate a rich misfire owing to evaporative fuel purging in step 206 following steps similar to those described previously takes place in step 198, the evaporative fuel purging must be stopped in step 207.

In the event that overlean due to EGR takes place, a misfire can be prevented by providing a limit value for a correction term of ΔA/FEGR in step 205.

The control apparatus of the present invention is not limited to the type of controlling the cylinder injection engine as set forth so far in connection with the foregoing embodiments but may be applied to another type of engine provided that the stratified charge combustion is carried out in the engine.

The program for performing the control operation shown in the flow charts of Figs. 19 to 21 has a code format readable by the computer. This program is stored in a semiconductor memory such as ROM 153 or a recording medium such as optical disk and magnetic disk and can be circulated in the form of the recording medium. The control program may be loaded on the ECU 15 through a communication line. In this case, the ECU 15 may be provided with the known data communication function.

According to the present invention, the purposive performance of the cylinder injection type internal combustion engine can be extracted to meet more improved fuel economy and exhaust emission control without substantially impairing the target operation condition.

While the embodiments of the present invention, as herein disclosed, constitute a preferred form, it is to be understood that other forms might be adopted.

**Claims**

1. A control apparatus for use in an internal combustion engine (8) which has an exhaust gas sensor (20) adapted to detect exhaust gas components so as to deliver a signal representing an air-fuel ratio of mixture and which performs stratified charge combustion, said control apparatus comprising control means (15) for generating a signal which control the air-fuel ratio of mixture, the fuel injection timing and the ignition timing on the basis of an output of said exhaust gas sensor.

2. A control apparatus according to claim 1, wherein said internal combustion engine (8) is a cylinder injection type internal combustion engine which performs stratified charge combustion and homogeneous charge combustion.

3. A control apparatus according to claim 2, wherein said control means (15) includes means (151, 70, 80, 90, 100) for determining at least one of the EGR quantity and the evaporative fuel quantity of said internal combustion engine on the basis of an operation condition of said internal combustion engine or a vehicle carrying said internal combustion engine.

4. A control apparatus according to claim 3, wherein said control means (15) further includes means (199, 200) for determining the quantity of influence (ΔA/FEGR) of the EGR upon the air-fuel ratio and the quantity of influence (ΔA/FEVP) of the evaporative fuel purging upon the air-fuel ratio on the basis of a control air-fuel ratio (A/FC) determined on the basis of the operation condition of said internal combustion engine, an actual air-fuel ratio (A/FMS) determined on the basis of the output of said exhaust gas sensor (20) and a preset reference air-fuel ratio (A/FMR).

5. A control apparatus according to claim 4, wherein said control means (15) further includes memory means (153) for storing a data table (70, 80, 90, 100) indicative of a value of the EGR quantity and a value of the evaporative fuel quantity which correspond to the operation condition of said vehicle and a value of the output of said exhaust gas sensor and means (202, 203) for determining control indices (EP, EG) on the basis of the EGR quantity and the evaporative fuel quantity which are read out of said data table and the output of said exhaust gas sensor, and wherein said control means (15) generates signals (IGN, IT) which control at least one of the injection timing and ignition timing of said internal combustion engine in accordance with said control indices.

6. A control apparatus according to claim 5, wherein when said actual air-fuel ratio (A/FMS) shifts from a preset limit value range (A/FEG, A/FEV), said control means (15) generates an air-fuel ratio control signal (A/F) resulting from correcting said actual air-fuel ratio (A/FMS) with the influence quantity (ΔA/FEGR) of said EGR upon the air-fuel ratio and the influence quantity (ΔA/FEVP) of said evaporative fuel purging upon the air-fuel ratio.

7. A control apparatus according to claim 6, wherein when said actual air-fuel ratio (A/FMS) shifts from the preset limit value range (A/FEG, A/FEV), said control means (15) generates signals (IGN, IT) which control at least one of the injection timing and ignition timing of said internal combustion engine in accordance with said control indices (EP, EG).

8. A control apparatus according to claim 7, wherein when said internal combustion engine is operated in stratified charge combustion, said control means (15) generates said air-fuel ratio control signal (A/F) and signals (A/F, IGN, IT) which control at least one of the air-fuel ratio, injection timing and ignition timing of said internal combustion engine.

9. An control apparatus according to claim 7, wherein when said actual air-fuel ratio (A/FMS) exceeds a preset rich limit value (A/FEV), said control means (15) generates (207) a signal which inhibits the evaporative fuel purging.

10. A control apparatus according to claim 7, wherein when said actual air-fuel ratio (A/FMS) is rendered to be richer than the preset limit value range (A/FEV) by the evaporative fuel purging during operation of said internal combustion engine in stratified charge combustion, said control means (15) generates a signal which controls the air-fuel ratio such that said internal combustion engine is brought into homogeneous charge combustion.

11. A control apparatus according to claim 7, wherein when said actual air-fuel ratio (A/FMS) is rendered to be leaner than the preset limit value range (A/FEG) by the EGR during operation of said internal combustion engine in homogeneous charge combustion, said control means (15) generates a signal which controls the air-fuel ratio such that said internal combustion engine is brought into stratified charge combustion.

12. A computer program product comprising:

a computer usable medium having computer readable program code means embodied in said medium for controlling an internal combustion engine (8) having an exhaust gas sensor (20) adapted to detect exhaust gas components so as to produce an output signal corresponding to an air-fuel ratio of mixture, said engine being operable in stratified charge combustion, said computer readable program code means comprising:

a) means for determining a control air-fuel ratio (A/FC) on the basis of an operation condition of said internal combustion engine;
b) means for fetching an output signal of said exhaust gas sensor (20);
c) means for determining an actual air-fuel ratio (A/FMS) on the basis of the output signal of said exhaust gas sensor;
d) means for determining (199, 200) the quantity of influence (ΔA/FEGR) of EGR upon the air-fuel ratio and the quantity of influence (ΔA/FEVP) of evaporative fuel purging upon the air-fuel ratio on the basis of said control air-fuel ratio (A/FC), said actual air-fuel ratio (A/FMS) and a preset reference air-fuel ratio (A/FMR); and
e) means for generating (199, 200) an air-fuel ratio control signal (A/F) obtained by correcting said actual air-fuel ratio (A/FMS) with the influence quantity (ΔA/FEGR) of said EGR upon the air-fuel ratio or the influence quantity (ΔA/FEVP) of said evaporative fuel purging upon the air-fuel ratio when said actual air-fuel ratio (A/FMS) shifts from a preset limit value range (A/FEG, A/FEV).

13. A computer program product according to claim 12, wherein said computer readable program code means further includes:

f) means for determining (202, 203) control indices (EP, EG) on the basis of the EGR quantity and the fuel vapor quantity, which are read out of a data table (70, 80, 90, 100) indicative of values of EGR quantity and fuel vapor quantity corresponding to an operation condition of said engine or a vehicle, and the output of said exhaust gas sensor; and
g) means for generating signals (IGN, IT) which control at least one of the injection timing and ignition timing of said internal combustion engine in accordance with said control indices (EP, EG).

14. A computer program product according to claim 12, wherein said computer readable program code means further includes:

h) means for generating (207) a signal for inhibiting the evaporative fuel purging when said actual air-fuel ratio (A/FMS) exceeds a preset rich limit value (A/FEV).

15. A system of controlling an internal combustion engine (8) being operable in stratified charge combustion, comprising:

an exhaust gas sensor (20) for detecting exhaust gas components and delivering a signal conforming to an air-fuel ratio of mixture;
an EGR unit (21) for recirculating part of exhaust gas to an intake manifold (7) so that the flow rate of the exhaust gas may be controlled;
an evaporative emission control unit (41) for absorbing fuel vapor and purging the absorbed fuel vapor to said intake manifold (7); and
control means (15) for generating signals which control the air-fuel ratio of mixture, the fuel injection timing and the ignition timing on the basis of an output of said exhaust gas sensor (20) when at least one of said EGR unit (21) and said evaporative emission control unit (41) is in operation.

**16.** A control system according to claim 15, wherein said internal combustion engine (8) is a cylinder injection type internal combustion engine which performs stratified charge combustion and homogeneous charge combustion.

**17.** A control system according to claim 16, wherein said control means (15) includes means (151, 70, 80, 90, 100) for determining at least one of the EGR quantity and the fuel vapor quantity of said internal combustion engine on the basis of an operation condition of said internal combustion engine or a vehicle carrying said internal combustion engine.

**18.** A control system according to claim 17, wherein said control means (15) further includes means (199, 200) for determining the quantity of influence (ΔA/FEGR) of the EGR upon the air-fuel ratio and the quantity of influence (ΔA/FEVP) of the evaporative fuel purging upon the air-fuel ratio on the basis of a control air-fuel ratio (A/FC) determined on the basis of the operation condition of said internal combustion engine, an actual air-fuel ratio (A/FMS) determined on the basis of the output of said exhaust gas sensor (20) and a preset reference air-fuel ratio (A/FMR).

**19.** A control system according to claim 18, wherein said control means (15) further includes memory means (153) for storing a data table (70, 80, 90, 100) indicative of a value of the EGR quantity and a value of the fuel vapor quantity which correspond to the operation condition of said vehicle and a value of the output of said exhaust gas sensor and means (202, 203) for determining control indices (EP, EG) on the basis of the EGR quantity and the evaporative fuel quantity which are read out of said data table and the output of said exhaust gas sensor, and wherein said control means (15) generates signals (IGN, IT) which control at least one of the injection timing and ignition timing of said internal combustion engine in accordance with said control indices.

**20.** A control system according to claim 19, wherein when said actual air-fuel ratio (A/FMS) shifts from a preset limit value range (A/FEG, A/FEV), said control means (15) generates an air-fuel ratio control signal (A/F) resulting from said actual air-fuel ratio (A/FMS) with the influence quantity (ΔA/FEGR) of said EGR upon the air-fuel ratio and the influence quantity (ΔA/FEVP) of said evaporative fuel purging upon the air-fuel ratio.

**21.** A control system according to claim 20, wherein when said actual air-fuel ratio (A/FMS) shifts from the preset limit value range (A/FEG, A/FEV), said control means (15) generates signals (IGN, IT) which control at least one of the injection timing and ignition timing of said internal combustion engine in accordance with said control indices (EP, EG).

**22.** A control system according to claim 21, wherein when said internal combustion engine is operated in stratified charge combustion, said control means (15) generates said air-fuel ratio control signal (A/F) and signals (A/F, IGN, IT) which control at least one of the air-fuel ratio, injection timing and ignition timing of said internal combustion engine.

**23.** A control system according to claim 21, wherein when said actual air-fuel ratio (A/FMS) exceeds a preset rich limit value (A/FEV), said control means (15) generates (207) a signal which inhibits the evaporative fuel purging.

**24.** A control system according to claim 21, wherein when said actual air-fuel ratio (A/FMS) is rendered to be richer than the preset limit value range (A/FEV) by the evaporative fuel purging during operation of said internal combustion engine in stratified charge combustion, said control means (15) generates a signal which controls the air-fuel ratio such that said internal combustion engine is brought into homogeneous charge combustion.

**25.** A control system according to claim 21, wherein when said actual air-fuel ratio (A/FMS) is rendered to be leaner than the preset limit value range (A/FEG) by the EGR during operation of said internal combustion engine in homogeneous charge combustion, said control means (15) generates a signal which controls the air-fuel ratio such that said internal combustion engine is brought into stratified charge combustion.

FIG. 1

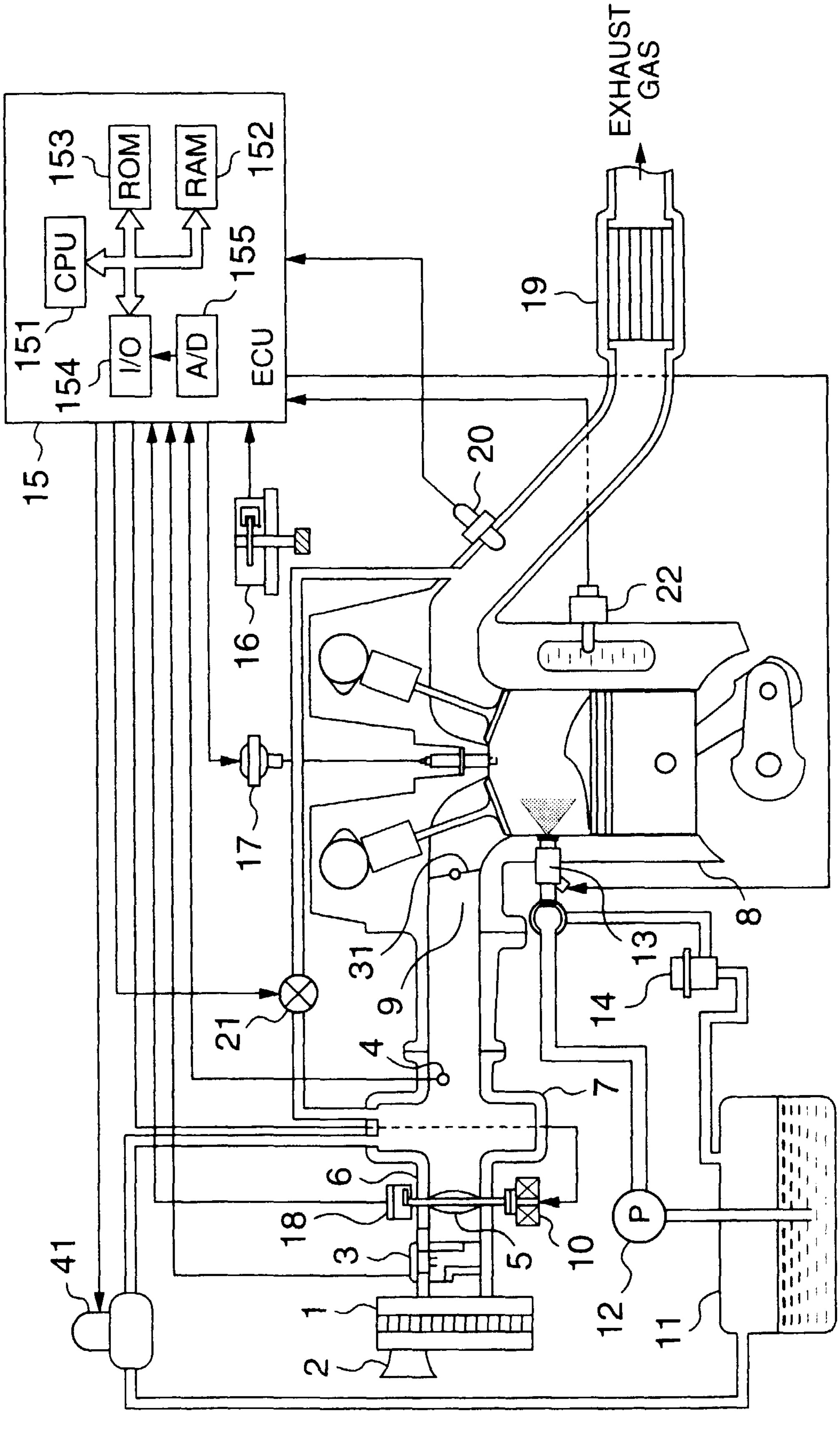
15
151
154
153
ROM
RAM
152
CPU
155
I/O
A/D
ECU
EXHAUST
GAS
19
20
22
16
17
21
31
9
13
14
8
4
7
6
18
3
5
10
P
12
11
1
2
41

FIG. 2

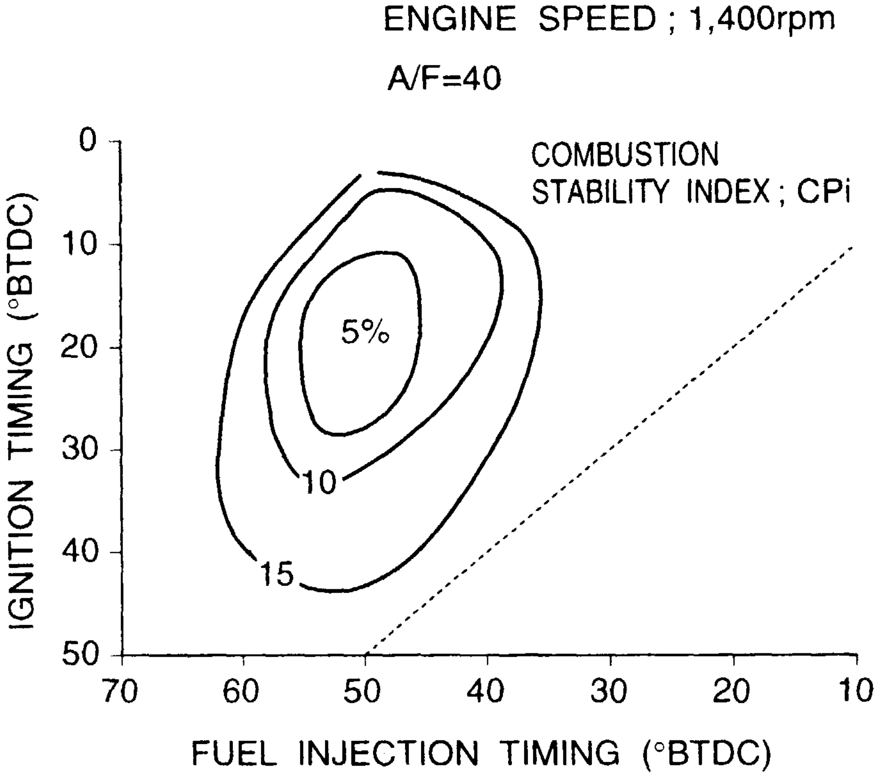
ENGINE SPEED ; 1,400rpm
A/F=40
COMBUSTION
STABILITY INDEX ; CPi
5%
10
15
0
10
20
30
40
50
IGNITION TIMING (°BTDC)
70
60
50
40
30
20
10
FUEL INJECTION TIMING (°BTDC)

FIG. 3

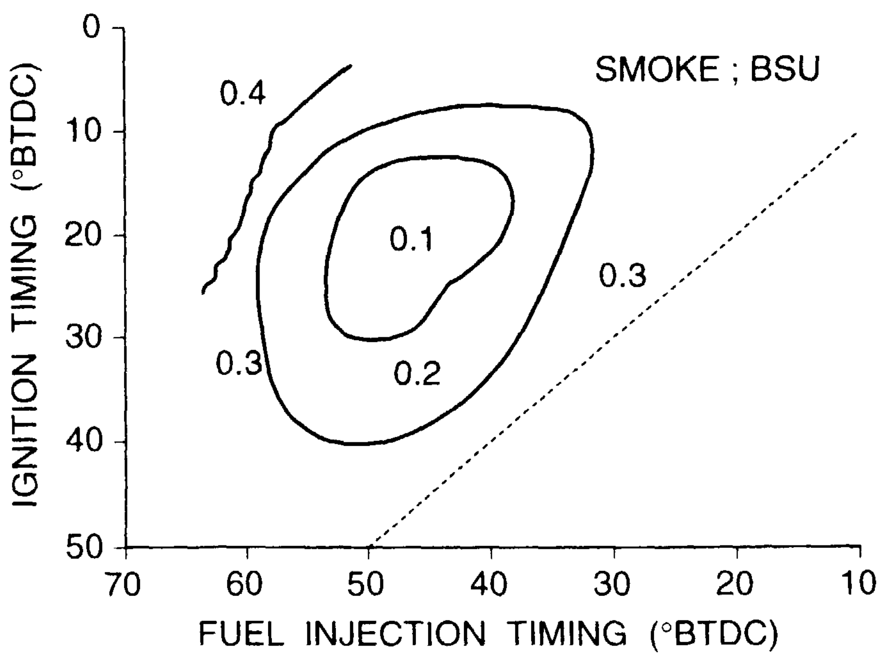
SMOKE ; BSU
0.4
0.1
0.3
0.3
0.2
0
10
20
30
40
50
IGNITION TIMING (°BTDC)
70
60
50
40
30
20
10
FUEL INJECTION TIMING (°BTDC)

FIG. 4

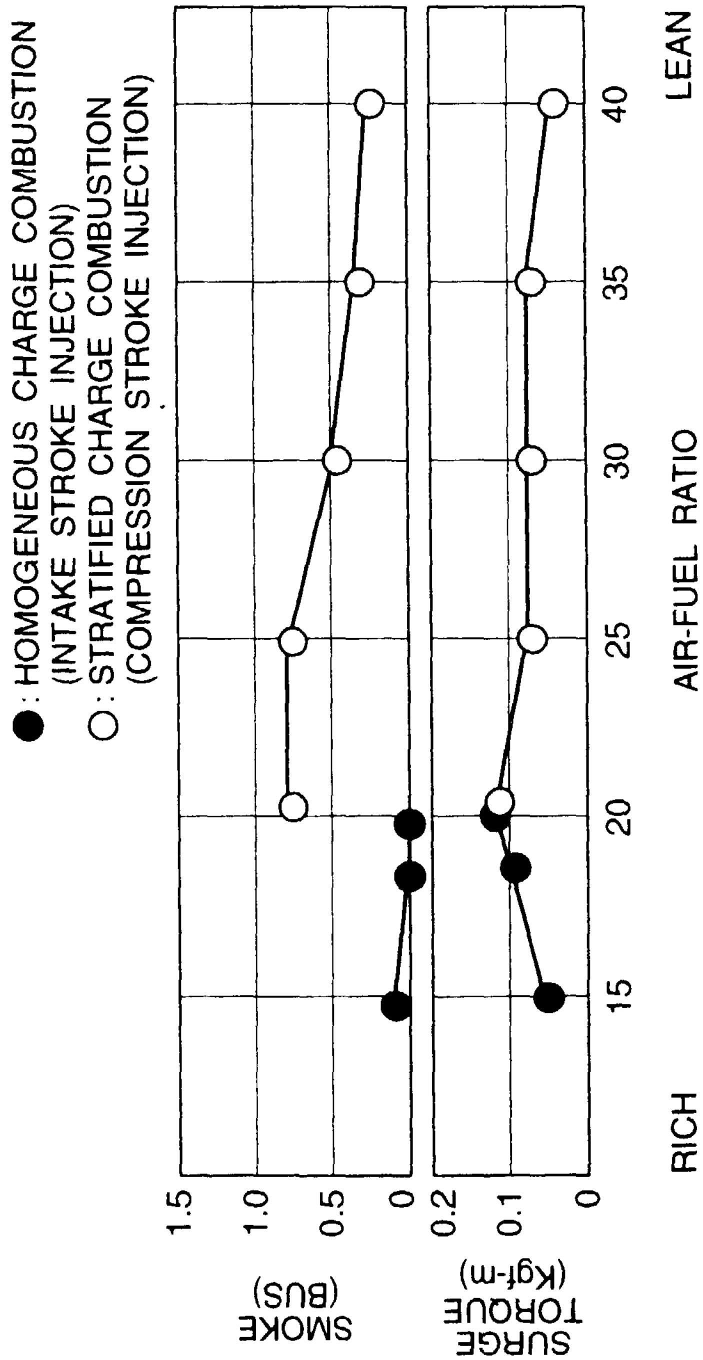
●: HOMOGENEOUS CHARGE COMBUSTION (INTAKE STROKE INJECTION)
○: STRATIFIED CHARGE COMBUSTION (COMPRESSION STROKE INJECTION)
SMOKE (BUS)
1.5
1.0
0.5
0
SURGE TORQUE (Kgf-m)
0.2
0.1
0
15
20
25
30
35
40
RICH
AIR-FUEL RATIO
LEAN

FIG. 5

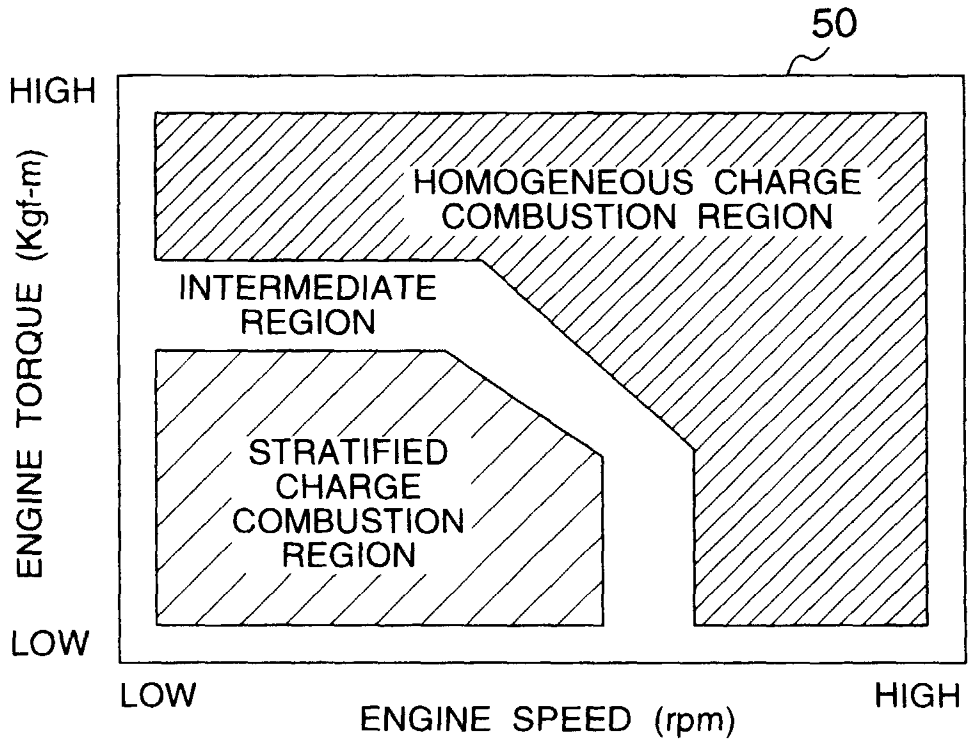
50
HIGH
ENGINE TORQUE (Kgf-m)
LOW
HOMOGENEOUS CHARGE
COMBUSTION REGION
INTERMEDIATE
REGION
STRATIFIED
CHARGE
COMBUSTION
REGION
LOW
ENGINE SPEED (rpm)
HIGH

FIG. 6

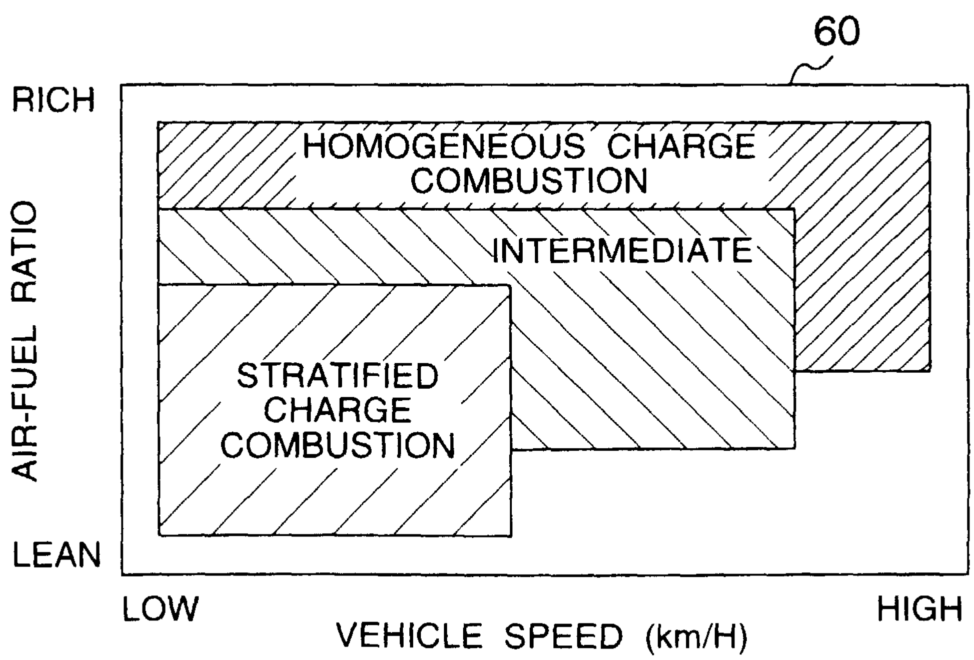
60
RICH
AIR-FUEL RATIO
LEAN
HOMOGENEOUS CHARGE
COMBUSTION
INTERMEDIATE
STRATIFIED
CHARGE
COMBUSTION
LOW
VEHICLE SPEED (km/H)
HIGH

FIG. 7

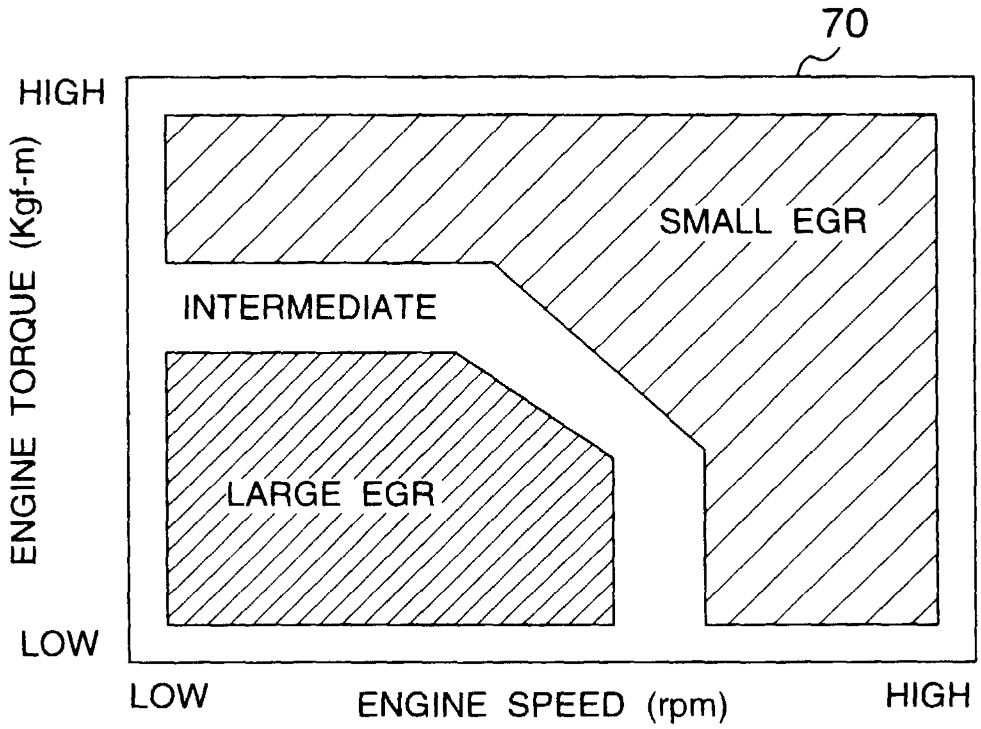
70
HIGH
ENGINE TORQUE (Kgf-m)
LOW
SMALL EGR
INTERMEDIATE
LARGE EGR
LOW
ENGINE SPEED (rpm)
HIGH

FIG. 8

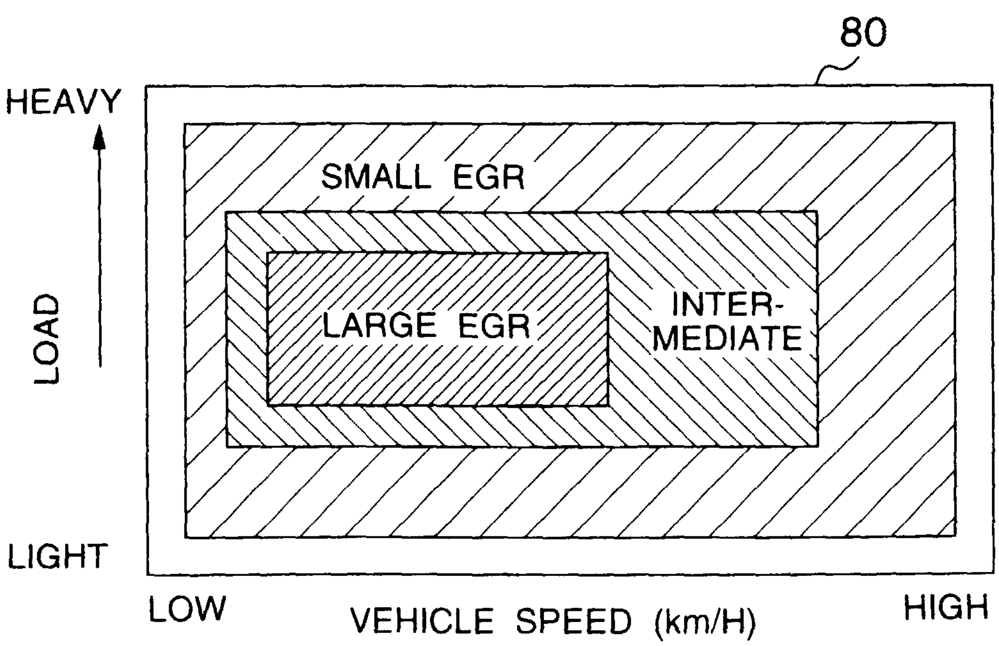
80
HEAVY
LOAD
LIGHT
SMALL EGR
LARGE EGR
INTER-
MEDIATE
LOW
VEHICLE SPEED (km/H)
HIGH

FIG. 9

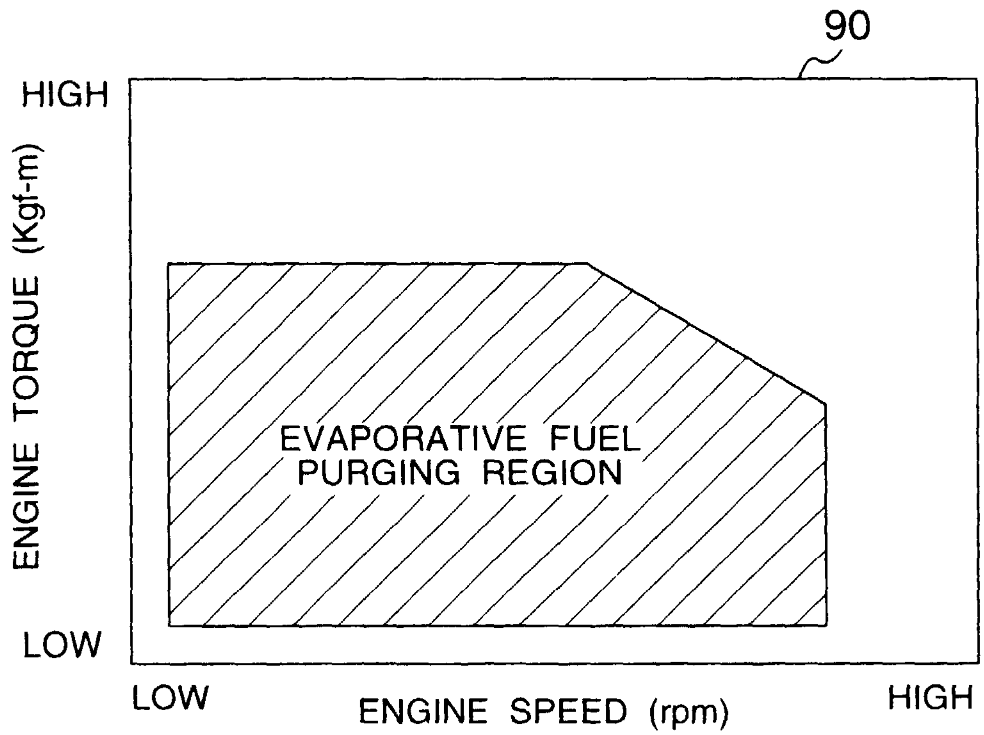
90
HIGH
ENGINE TORQUE (Kgf-m)
LOW
EVAPORATIVE FUEL
PURGING REGION
LOW
ENGINE SPEED (rpm)
HIGH

FIG. 10

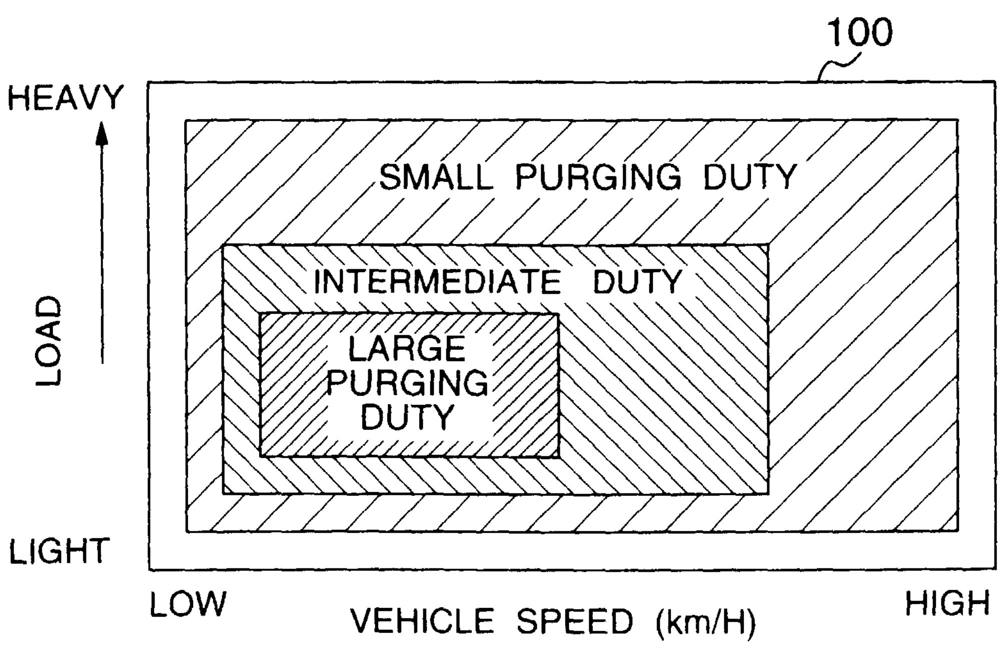
100
HEAVY
LOAD
LIGHT
SMALL PURGING DUTY
INTERMEDIATE DUTY
LARGE
PURGING
DUTY
LOW
VEHICLE SPEED (km/H)
HIGH

FIG. 11

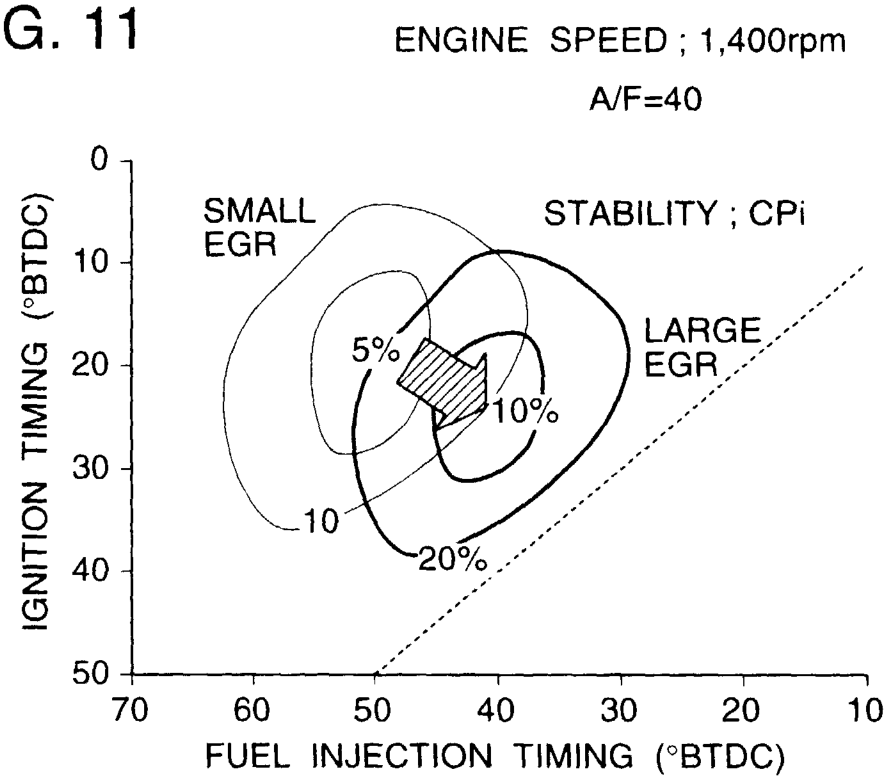
ENGINE SPEED ; 1,400rpm
A/F=40
SMALL EGR
STABILITY ; CPi
LARGE EGR
5%
10%
10
20%
IGNITION TIMING (°BTDC)
FUEL INJECTION TIMING (°BTDC)
0
10
20
30
40
50
70
60
50
40
30
20
10

FIG. 12

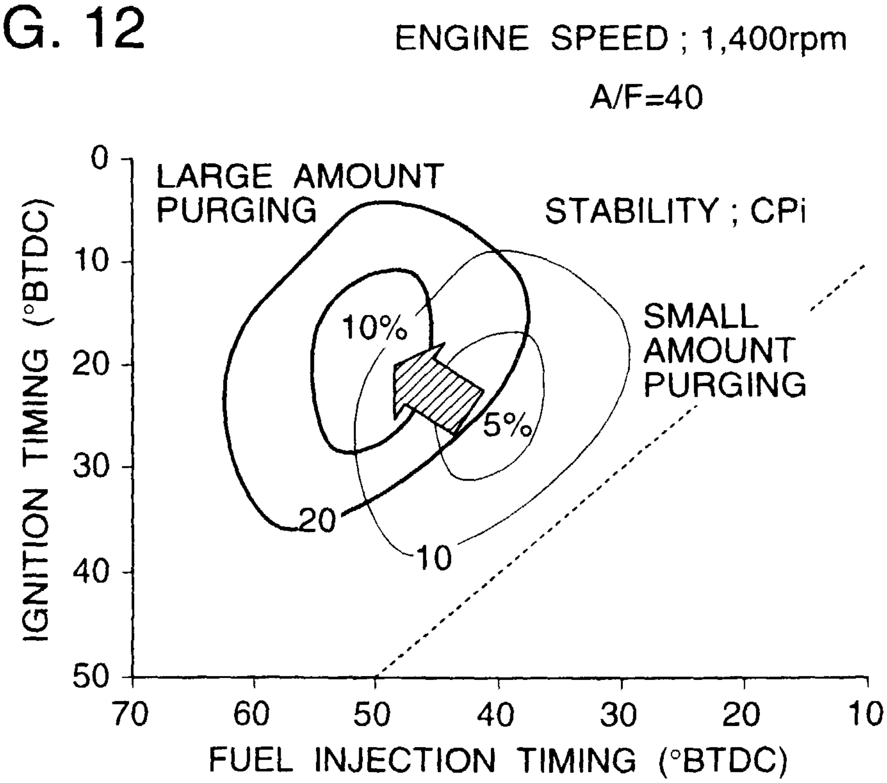
ENGINE SPEED ; 1,400rpm
A/F=40
LARGE AMOUNT PURGING
STABILITY ; CPi
SMALL AMOUNT PURGING
10%
5%
20
10
IGNITION TIMING (°BTDC)
FUEL INJECTION TIMING (°BTDC)
0
10
20
30
40
50
70
60
50
40
30
20
10

FIG. 13

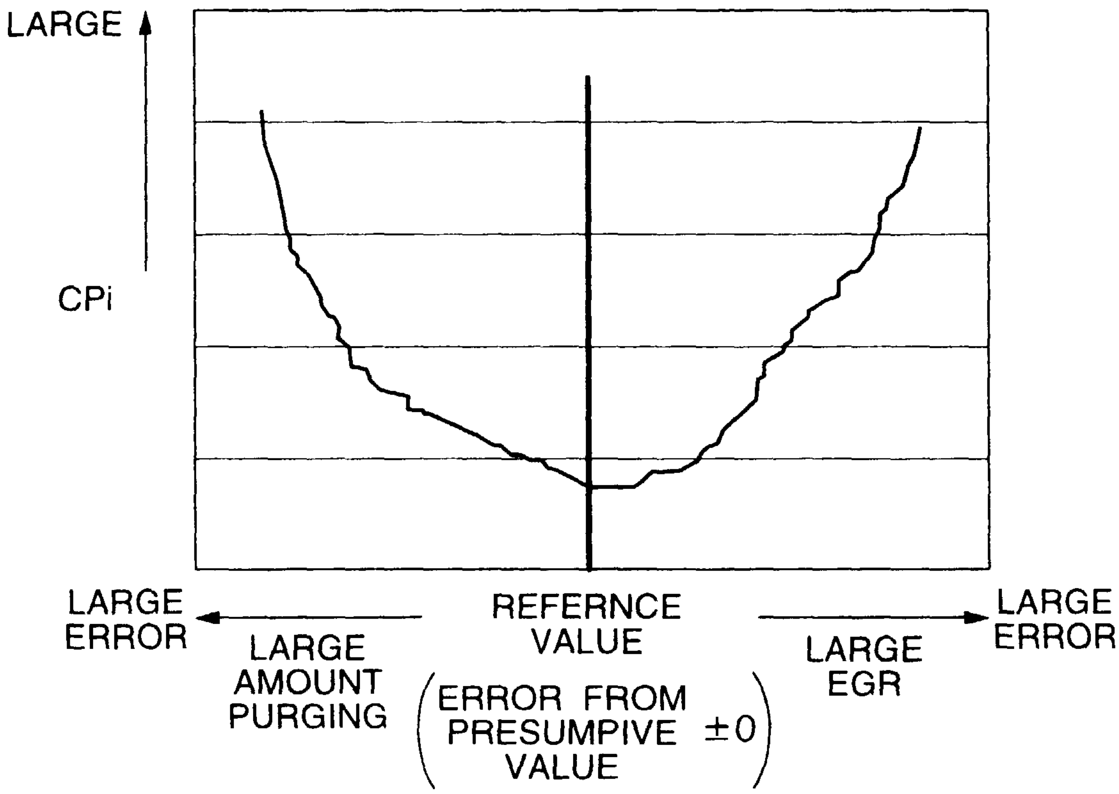
LARGE
CPi
LARGE ERROR
LARGE AMOUNT PURGING
REFERNCE VALUE
(ERROR FROM PRESUMPIVE VALUE ±0)
LARGE EGR
LARGE ERROR

FIG. 14

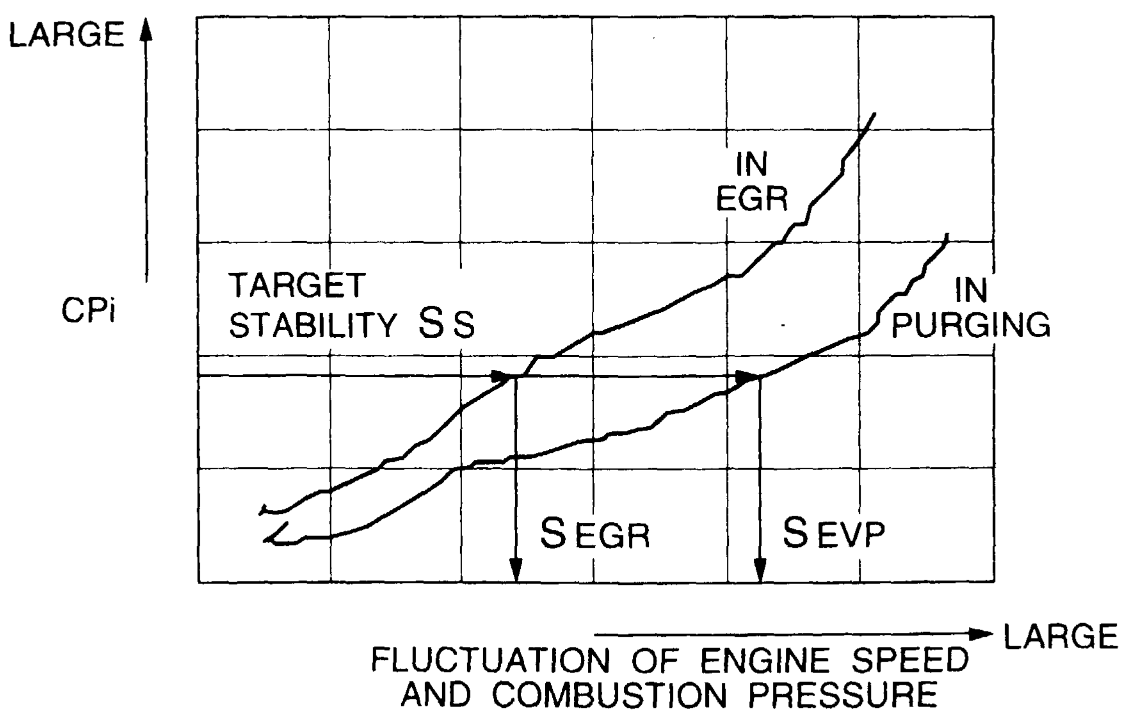
LARGE
CPi
TARGET STABILITY SS
IN EGR
IN PURGING
SEGR
SEVP
LARGE
FLUCTUATION OF ENGINE SPEED AND COMBUSTION PRESSURE

# FIG. 15

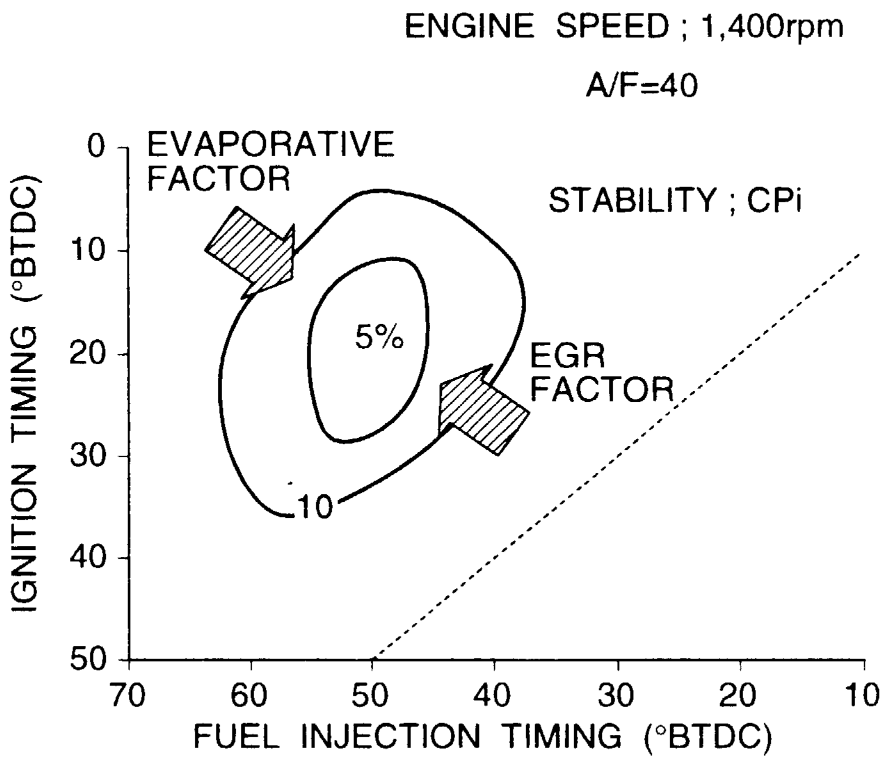


# FIG. 16

EVAPORATIVE FACTOR ; EP

$EP = \iint f\ EVAP\ (dN\ dTo)$

$f\ EVAP = f\ (N, To, Te, DNS)$

EGR FACTOR ; EG

$EG = \iint f\ EGR\ (dN, dTo)$

$f\ EGR = f\ (N, To, Te)$

FIG. 17

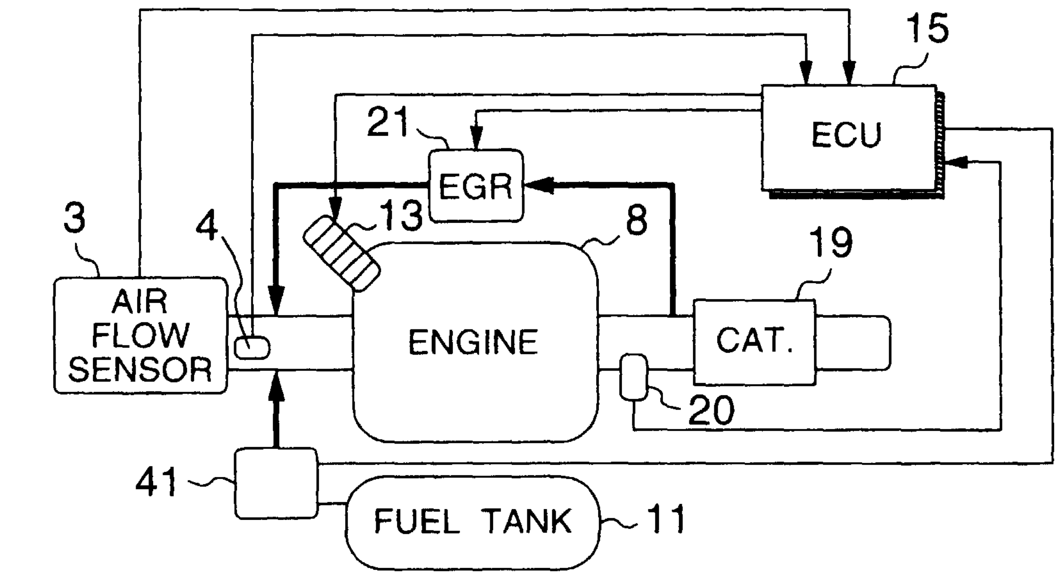
15
ECU
21
EGR
13
8
3
4
19
AIR
FLOW
SENSOR
ENGINE
CAT.
20
41
FUEL TANK
11

FIG. 18

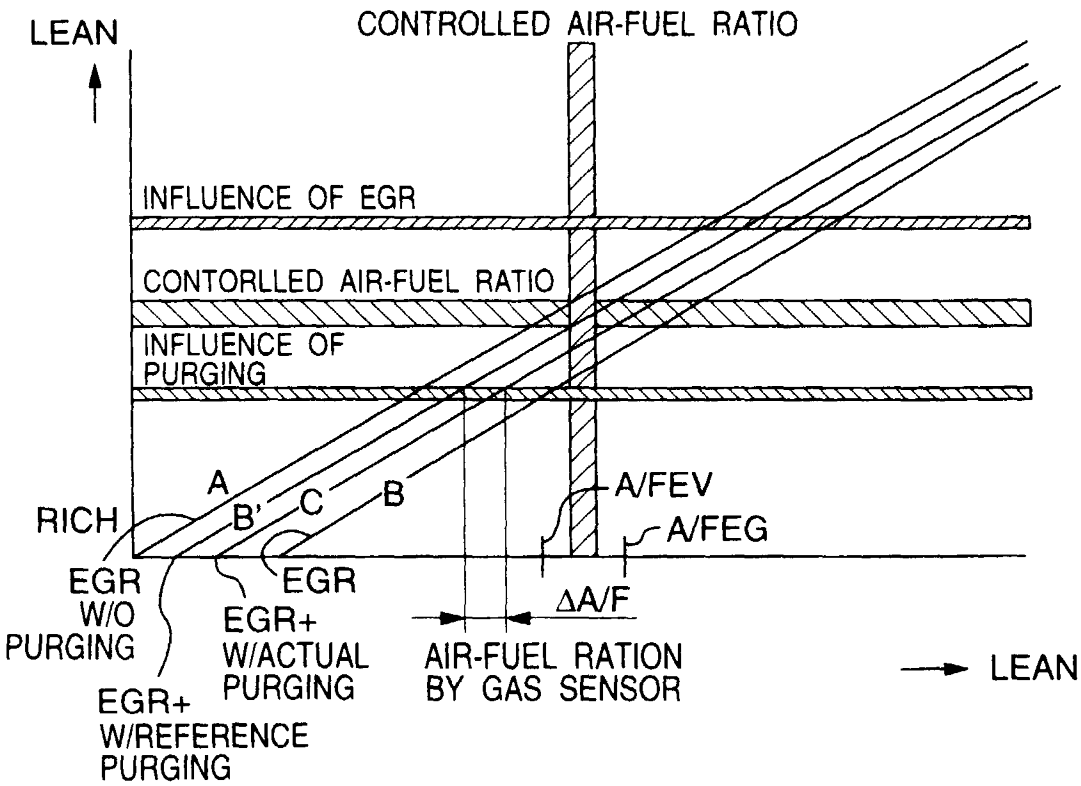
LEAN
CONTROLLED AIR-FUEL RATIO
INFLUENCE OF EGR
CONTORLLED AIR-FUEL RATIO
INFLUENCE OF
PURGING
A
B'
C
B
A/FEV
A/FEG
RICH
EGR
W/O
PURGING
EGR+
W/REFERENCE
PURGING
EGR+
W/ACTUAL
PURGING
EGR
ΔA/F
AIR-FUEL RATION
BY GAS SENSOR
LEAN

FIG. 19

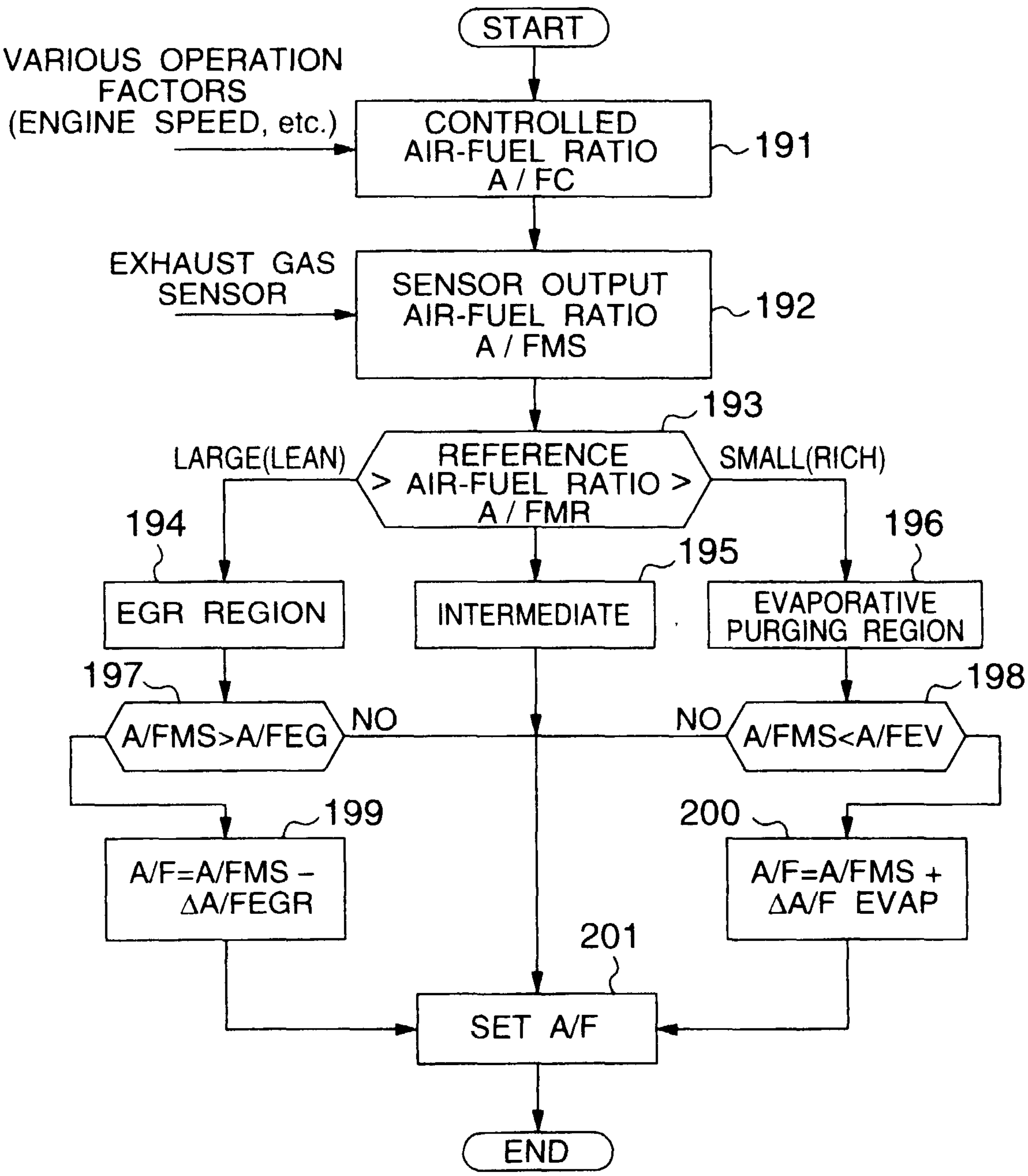
START
VARIOUS OPERATION FACTORS (ENGINE SPEED, etc.)
CONTROLLED AIR-FUEL RATIO A / FC
191
EXHAUST GAS SENSOR
SENSOR OUTPUT AIR-FUEL RATIO A / FMS
192
193
LARGE(LEAN)
REFERENCE > AIR-FUEL RATIO > A / FMR
SMALL(RICH)
194
195
196
EGR REGION
INTERMEDIATE
EVAPORATIVE PURGING REGION
197
198
A/FMS>A/FEG
NO
NO
A/FMS<A/FEV
199
200
A/F=A/FMS − ΔA/FEGR
A/F=A/FMS + ΔA/F EVAP
201
SET A/F
END

FIG. 20

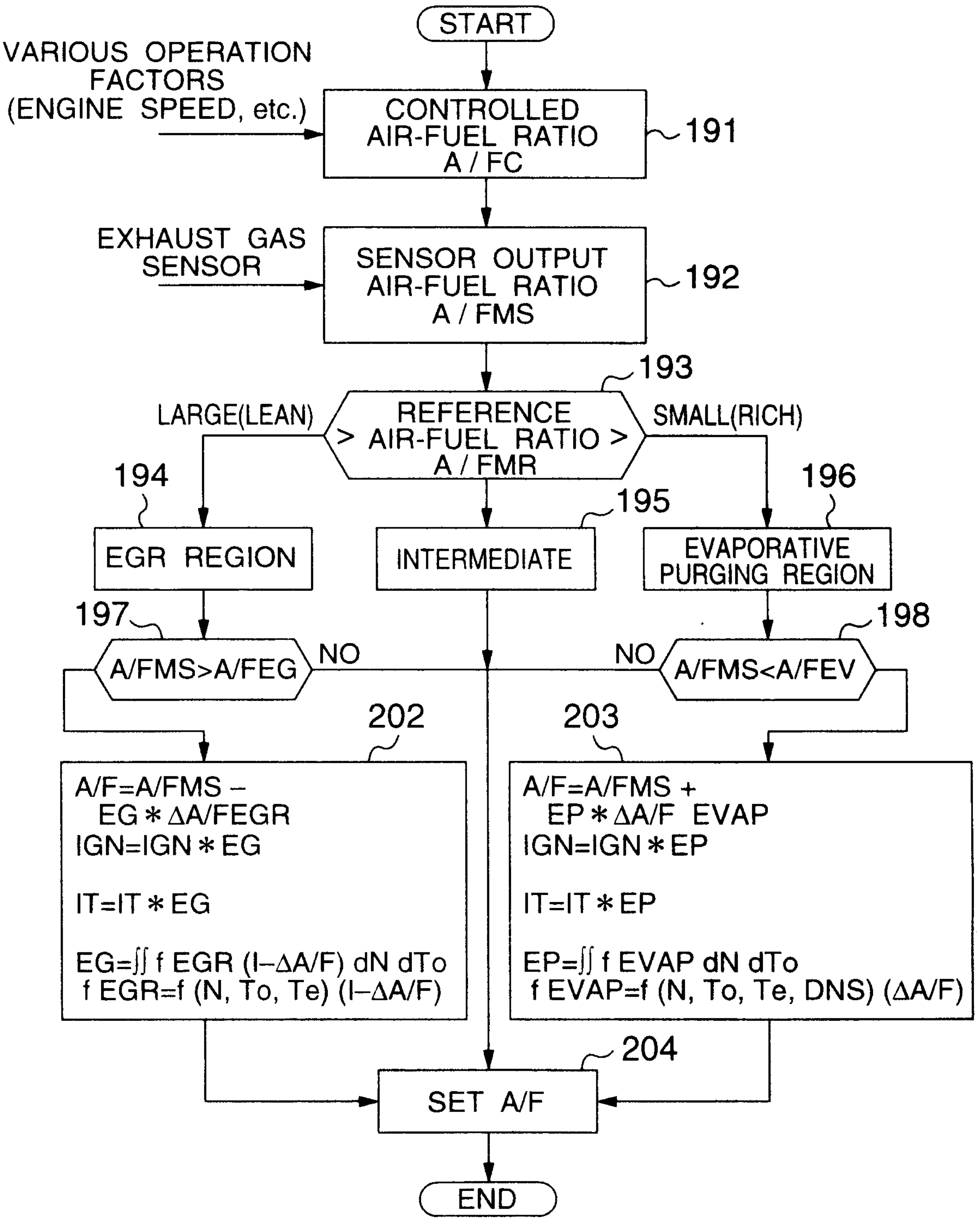
START
VARIOUS OPERATION FACTORS (ENGINE SPEED, etc.)
CONTROLLED AIR-FUEL RATIO A / FC
191
EXHAUST GAS SENSOR
SENSOR OUTPUT AIR-FUEL RATIO A / FMS
192
193
LARGE(LEAN)
> REFERENCE AIR-FUEL RATIO > A / FMR
SMALL(RICH)
194
195
196
EGR REGION
INTERMEDIATE
EVAPORATIVE PURGING REGION
197
198
A/FMS>A/FEG
NO
NO
A/FMS<A/FEV
202
203
A/F=A/FMS – EG ∗ ΔA/FEGR
IGN=IGN ∗ EG
IT=IT ∗ EG
EG=∫∫ f EGR (I–ΔA/F) dN dTo
f EGR=f (N, To, Te) (I–ΔA/F)
A/F=A/FMS + EP ∗ ΔA/F EVAP
IGN=IGN ∗ EP
IT=IT ∗ EP
EP=∫∫ f EVAP dN dTo
f EVAP=f (N, To, Te, DNS) (ΔA/F)
204
SET A/F
END

FIG. 21

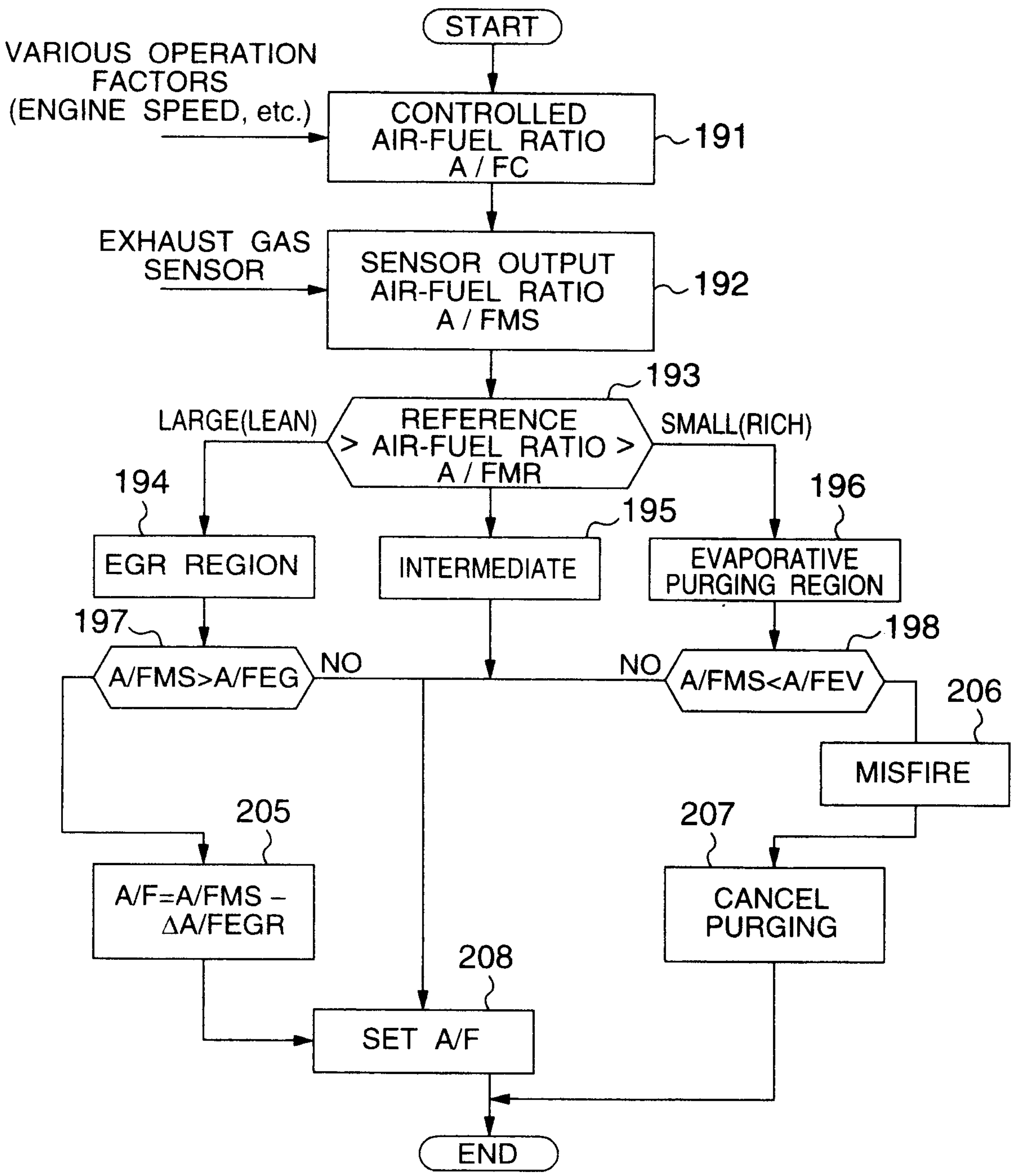
START
VARIOUS OPERATION FACTORS (ENGINE SPEED, etc.)
CONTROLLED AIR-FUEL RATIO A / FC
191
EXHAUST GAS SENSOR
SENSOR OUTPUT AIR-FUEL RATIO A / FMS
192
193
LARGE(LEAN)
REFERENCE > AIR-FUEL RATIO > A / FMR
SMALL(RICH)
194
EGR REGION
195
INTERMEDIATE
196
EVAPORATIVE PURGING REGION
197
A/FMS>A/FEG
NO
NO
198
A/FMS<A/FEV
206
MISFIRE
205
A/F=A/FMS − ΔA/FEGR
207
CANCEL PURGING
208
SET A/F
END